# EUROPÄISCHE PATENTSCHRIFT

(11) **EP 0 557 693 B1**
(45) Veröffentlichungstag und Bekanntmachung des Hinweises auf die Patenterteilung: **18.10.1995**
(21) Anmeldenummer: 93100416.2
(22) Anmeldetag: 13.01.1993
(51) Int. Cl.: B29C 65/22

(54) **Schweissband**
Welding strip
Bande de soudage

(30) Priorität: 24.02.1992 DE 4205583
(43) Veröffentlichungstag der Anmeldung: 01.09.1993
(73) Patentinhaber: Windmöller & Hölscher, D-49525 Lengerich (DE)
(72) Erfinder: Bauer, Horst, W-4540 Lengerich (DE)
(74) Vertreter: Laufhütte, Dieter, Dr.-Ing.

(56) Entgegenhaltungen:
- WO-A-87/07212
- DE-A- 3 629 497
- GB-A- 1 030 789
- US-A- 3 253 122
- US-A- 4 010 063

## Beschreibung

Die Erfindung betrifft ein Schweißband zum Schweißen von Kunststoffolien bestehend aus einem Stahlband, das in seinen Endbereichen mit einer dünnen Kupferschicht überzogen ist.

Schweißbänder dieser Art werden in Vorrichtungen zum Schweißen von Folien, wie sie beispielsweise aus der EP 0 155 548 B1 bekannt ist, eingesetzt. In diesen Vorrichtungen werden kontinuierliche Folienbahnen, beispielsweise Schläuche zu Beuteln verschweißt. Die entsprechend gefaltete Folienbahn wird transportiert bis die zu verschweißende Stelle zwischen entsprechenden Schweißbacken liegt. Auf den Schweißbacken liegt jeweils das Schweißband, welches als Widerstandsheizelement ausgebildet ist. Das Schweißband wird erwärmt und die zu verschweißende Folienbahn wird zwischen den Schweißbacken eingeklemmt. Die Wärme des Schweißbandes überträgt sich auf die Folie und führt zu deren Verschweißen.

Das Schweißband besteht aus einem schmalen Stahlband. Zwischen dem Schweißband und der zu verschweißenden Folienbahn verläuft ein Teflonband. Dieses Teflonband verläuft über die gesamte Schweißbacke, also über den Rand der zu verschweißenden Folienbahn hinaus. Wird nun das gesamte Schweißband als Stahlband ausgeführt, so entstehen im Randbereich der zu schweißenden Schlauchfolienbahn überhitzte Bereiche, die zur Beschädigung der Teflonbänder und damit sogar zum Kurzschluß führen können. Zur Abhilfe dieses Problems ist es bereits bekannt, die Endbereiche des Schweißbandes mit einer dünnen Kupferschicht zu überziehen, die für eine gute Wärmeleitfähigkeit und elektrische Leitfähigkeit sorgt. Aufgrund dieser verbesserten Wärmetransportfähigkeit wird eine lokale Überhitzung des Schweißbandes vermieden.

Werden derartige Schweißbänder nun zum Verschließen mit aggressiven Medien, beispielsweisen Salzen, gefüllten Beuteln oder Säcken verwendet, ergibt sich das Problem, daß nach verhältnismäßig kurzer Standzeit die Kupferschicht weggefressen wird. Dies führt aber wieder zu lokalen Überhitzungen des Schweißbandes und bedingt dadurch die Schädigung des Teflonbandes.

Aufgabe der vorliegenden Erfindung ist es daher ein gattungsgemäßes Schweißband derart weiterzubilden, daß es auch zum Verschließen von Folienbeuteln oder -säcken eingesetzt werden kann, welche mit chemisch reaktiven und aggressiven Füllgütern befüllt werden.

Erfindungsgemäß wird diese Aufgabe dadurch gelöst, daß die grüne Kupferschicht mit einer vergleichsweise noch dünneren Metallschutzschicht überzogen ist. Dieser Erfindung liegt die überraschende Erkenntnis zugrunde, daß durch einen entsprechenden hauchdünnen Überzug der Kupferschicht die Resistenz der Kupferschicht gegenüber chemisch aggressiven Stoffen, wie beispeilsweise Salzen, erhöht wird. Andererseits wird die gute Wärmeleitfähigkeit und die gute elektrische Leitfähigkeit, welche durch die Kupferschicht erreicht wird, nicht negativ beeinträchtigt. Die Standzeit der Schweißbänder kann in entsprechenden Schweißstationen zum Verschließen von Beuteln oder Säcken, welche mit aggressiven Stoffen gefüllt werden, um den Faktor 10 verbessert werden. Hierdurch bedingt werden die Wartungsintervalle derartiger Schweißstationen und damit die Betriebskosten wesentlich verringert.

Die Kupferschicht kann eine Dicke von ca. 40-60 µm, vorzugsweise ca. 50 µm aufweisen. Die darauf aufgebrachte Metallschutzschicht kann eine Dicke von ca. 2-5 µm, vorzugsweise ca. 3 µm, aufweisen.

Für den Fall, daß als agressive Stoffe anorganische Salze in Frage kommen, besteht die Metallschutzschicht vorzugsweise aus Nickel.

Weitere Einzelheiten und Vorteile der vorliegenden Erfindung werden anhand des in der Zeichnung dargestellten Ausführungsbeispiels im folgenden näher erläutert. Es zeigen:
- Fig. 1:: eine Seitenansicht eines Teils einer Schweißstation, in welchem ein erfindungsgemäßes Schweißband eingesetzt wird,
- Fig. 2:: eine Draufsicht auf ein erfindungsgemäßes Schweißband und
- Fig. 3:: einen schematischen Querschnitt durch einen Schweißbacken mit darübergeführtem Teflonband.

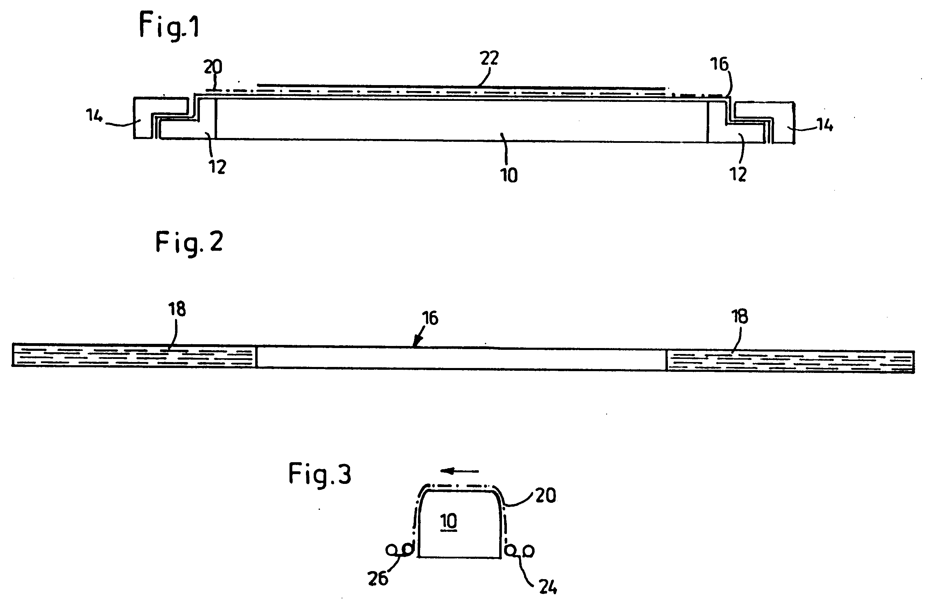

In Fig. 1 ist nur ein Teil einer Schweißstation gezeigt. An den Enden einer Schweißbacke 10 sind jeweils Isolatoren 12 angeordnet. Auf den Isolatoren 12 sind mit Anschlußklemmen 14 die Enden eines Schweißbandes 16 festgeklemmt. Das Schweißband 16 verläuft längs der Schweißbacke 10, wie in Fig. 1 schematisch dargestellt.

Oberhalb des Schweißbandes 16 verläuft ein Teflonband 20. In der Schnittdarstellung gemäß Fig. 3 ist angedeutet, wie das Teflonband 20 über den Schweißbacken 10 geführt ist. Es wird von einer Vorratsrolle 24 abgezogen und auf eine Wickelrolle 26 aufgewickelt. Dabei wird das Teflonband 20 nach jeder Schweißung um eine Wegstrecke in Pfeilrichtung fortbewegt. In Fig. 1 ist oberhalb des Teflonbandes 20 die zu verschweißende Folie 22 gezeigt. Aus den in Fig. 1 gezeigten Mengenverhältnissen wird deutlich, daß die seitlichen Enden des Teflonbandes 20 bis in den Bereich der Isolatoren 12 und damit über die Randbereiche der zu verschweißenden Folienschlauchbahn 22 hinausragen.

In Fig. 2 ist das erfindungsgemäße Schweißband 16 vor seiner Montage dargestellt. Das hier dargestellte Schweißband dient zur Erzeugung einer Querschweißnaht. Selbstverständlich kann das Schweißband 16 in seiner Formgebung abgewandelt werden und so auch als Schweißband zur Erzeugung einer Eckenschweißnaht eingesetzt werden. Das in Fig. 2 dargestellte Schweißband 16 wird - wie in Fig. 1 dargestellt - zum Herstellen von Querschweißnähten herangezogen. Das Schweißband 16 besteht aus einem Stahlband, welches jeweils verkupferte Enden 18 aufweist. Das Band weist in dem hier vorgestellten Ausführungsbeispiel eine Breite von 6 mm und eine Länge der verkupferten Bereiche von jeweils 120 mm auf. Der Bereich zwischen den verkupferten Bereichen ist 420 mm lang. Die Dicke des Schweißbandes 16 beträgt ca. 0,5 mm. Die Kupferschicht der verkupferten Bereiche 18 ist ca. 50 µm dick. Auf die Kupferschicht ist eine Nickelschicht von ca. 3 µm aufgebracht.

Versuche mit dem zuvor beschriebenen Schweißband in einer Sackbefüllungsstation, in welcher anorganische Salze abgefüllt werden, hat ergeben, daß die Schweißbänder nun nicht mehr bereits nach 63.000 Schweißungen ausgetauscht werden müssen. Mit dem erfindungsgemäßen Schweißband konnten mehr als 700.000 Schweißungen durchgeführt werden, ohne daß die Kupferschicht 18 des Schweißbandes 16 beschädigt worden wäre.

## Patentansprüche

1. Schweißband zum Schweißen von Kunststoffolien bestehend aus einem Stahlband, das in seinen Endbereichen mit einer dünnen Kupferschicht überzogen ist, dadurch gekennzeichnet, daß die dünne Kupferschicht wiederum mit einer vergleichsweise noch dünneren Metallschutzschicht überzogen ist.

2. Schweißband nach Anspruch 1, dadurch gekennzeichnet, daß die Kupferschicht eine Dicke von ca. 40-60 µm, vorzugsweise ca. 50 µm, und die Metallschutzschicht eine Dicke von ca. 2-5 µm, vorzugsweise ca. 3 µm, aufweisen.

3. Schweißband nach Anspruch 1, dadurch gekennzeichnet, daß die Metallschutzschicht aus Nickel besteht.

## Claims

1. Welding band for the welding of plastic films and sheets, consisting of a steel strip which is coated at its end areas with a thin layer of copper, characterised in that the thin copper layer is in turn coated with a yet thinner protective metal layer.

2. Welding band according to Claim 1, characterised in that the copper layer has a thickness of approx. 40-60 µm, preferably approx. 50 µm, and the protective metal layer has a thickness of approx. 2-5 µm, preferably approx. 3 µm.

3. Welding band according to Claim 1, characterised in that the protective metal layer is of nickel.

## Revendications

1. Bande à souder des films plastiques consistant en une bande d'acier revêtue en ses extrémites d'une couche de cuivre mince, caractérisée en ce que la couche de cuivre mince est revêtue à son tour d'une couche protectrice métallique en comparaison encore plus mince.

2. Bande à souder selon la revendication 1, caractèrisée en ce que la couche de cuivre présente une épaisseur d'environ 40 - 60 µm, de préférence environ 50 µm, et que la couche protectrice métallique présente une épaisseur de 2 à 5 µm, de préférence environ 3 µm.

3. Bande à souder selon la revendication 1, caractérisée en ce que la couche protectrice métallique est en nickel.
